# EUROPÄISCHE PATENTSCHRIFT

(11) **EP 2 589 094 B1**
(45) Veröffentlichungstag und Bekanntmachung des Hinweises auf die Patenterteilung: **07.09.2016**
(21) Anmeldenummer: 11738650.8
(22) Anmeldetag: 04.07.2011
(51) Int. Cl.: H01M 2/10, H01M 2/34, H01M 10/625, H01M 10/63, H01M 10/653, H01M 10/617, H01M 10/613, H01M 10/658

(54) **THERMISCHE ENTKOPPLUNG VON BATTERIEZELLEN IM STÖRFALL**
THERMAL ISOLATION OF CELLS IN CASE OF A BATTERY INCIDENT
ISOLEMENT THERMIQUE DE CELLULES DANS LE CAS D'UN INCIDENT DE PILES

(30) Priorität: 02.07.2010 DE 102010030881
(43) Veröffentlichungstag der Anmeldung: 08.05.2013
(73) Patentinhaber: Robert Bosch GmbH, 70442 Stuttgart (DE)
(72) Erfinder: IMRE, Arpad, 71665 Vaihingen (DE)
(86) Internationale Anmeldenummer: PCT/EP2011/061225
(87) Internationale Veröffentlichungsnummer: WO 2012/001174

(56) Entgegenhaltungen:
- EP-A1- 0 964 470
- EP-A1- 2 216 843
- DE-A1-102007 010 739
- DE-A1-102009 018 442
- US-A1- 2006 164 795

## Beschreibung

Die vorliegende Erfindung betrifft ein Batteriemodul mit einer Mehrzahl von zueinander benachbart angeordneten und elektrisch miteinander verbundenen Batteriezellen, zwischen welchen in einem Störfall des Batteriemoduls und/oder einzelner Batteriezellen der thermischen Widerstandes zwischen benachbarten Batteriezellen erhöht werden kann, um eine Überhitzung benachbarter Zellen zu vermeiden. Darüber hinaus betrifft die Erfindung ein Verfahren zur thermischen Entkopplung von Batteriezellen im Störfall.

### Stand der Technik

Die Energiespeicher für Fahrzeuge und für Anwendungen in der Energiewirtschaft, wie z.B. Stationäre Energiespeicher, müssen zukünftig ein wesentlich größeres Speicherpotential und eine höhere Zuverlässigkeit, eine wesentlich höhere Lebensdauer und vor allem ein wesentlich höheres Sicherheitsniveau aufweisen. Die LiIonen/Lithium-Metall Technologie hat eindeutige Performance und Gewichtsvorteile gegenüber anderen Energiespeichern, verfügt aber heute noch nicht über die notwendige Sicherheit.

Die Sicherheit von Lithium-Ionen Batterien ist ein nicht zu vernachlässigender Faktor für den Einsatz z. B. in Fahrzeugen. Im Vergleich zu Anwendungen in der Mobilelektronik ist die chemisch aktive Masse einer Traktionsbatterie wesentlich höher und somit das Gefährdungspotenzial deutlich größer. Da die Elektroden nur durch einen passivierenden Oberflächenfilm gegen eine plötzliche Reaktion mit dem organischen, leicht entflammbaren Elektrolyten geschützt sind, ist ein Betriebszustand zu vermeiden, der ein plötzliches Aufbrechen der Filme begünstigt, wie z.B. hohe Temperaturen, Überladung oder Überentladung. Ein thermisches Durchgehen der Zelle durch lokale Überhitzung kann auch durch interne Kurzschlüsse ausgelöst werden, z.B. durch Verunreinigungen in der Produktion.

Im Allgemeinen gilt, dass die Sicherheit maßgeblich von der Kombination der tatsächlich gewählten Materialen für Elektroden und Elektrolyt sowie von der Qualität der Fertigung der Zellen abhängt. Typischerweise bestehen die Traktionsbatterien aus einigen hundert bis zu mehreren tausend Einzelzellen, um die Angeforderte Reichweite (Batteriekapazität) und Leistung zur Verfügung zu stellen. In der praktischen Ausführung werden die Einzelzellen zu einem räumlich kompakten Modul montiert. Die Zellen in einem Modul sind normalerweise so eng gepackt, dass beim thermischen Durchgehen eine einzige Zelle auch Nachbarzellen "entzünden" werden können. Dabei besteht die Gefahr, dass es durch eine Kettenreaktion zu einer Zersetzung bzw. Zerstörung des gesamten Batteriemoduls kommen kann. In einem Extremfall kann es auch zu einem Brand des Batteriemoduls kommen, wobei insbesondere zu berücksichtigen ist, dass viele Batteriemodul-Typen wie z.B. Lithium-Ionen Akkumulatoren, nicht mit Wasser in Berührung kommen dürfen, um die Alkalimetall typische Reaktion mit Wasser unter Bildung von Wasserstoff zu vermeiden. Insoweit müssen im Brandfall wasserfreie Löschmittel Anwendung finden.

Die Koreanische Patentanmeldung KR 2006086120 offenbart ein Batteriemoduls mit verbesserter Wärmeabgabe der Batteriezellen durch modifizierte Anordnung der Batteriezellen und dem Vorsehen von Kühlkanälen an den Batteriezellen.

Die US-Offenlegungsschrift US 5456994 A beschreibt ein Batteriemodul mit einer Temperaturüberwachung und einem geschlossenen Gehäuse zur Verwendung in elektrischen Fahrzeugen. Die hier beschriebenen Batteriemodule weisen ein mit einem Lufteinlass auf der Vorderseite und einem Luftauslass an der Rückseite versehenes Gehäuse auf. Das Gehäuse ist mittels Abtrennungen in einzelne Kammern aufgeteilt, in welche einzelne Batteriezellen eingesetzt werden können.

Die internationale Patentanmeldung WO 2008027343 offenbart ein Batteriemodul für Fahrzeuge, in welchem Batteriezellen in zueinander beabstandeten Gruppen angeordnet sind. Eine Mehrzahl von Batteriezellen sind innerhalb eines Gehäuses in zwei Gruppen angeordnete, welche durch einen Mittelbereich voneinander getrennt sind. Das Gehäuse ist derart gestaltet, dass Kühlluft aus dem Mittelbereich zu den Zellen gelangen kann. Dabei ist jede Zellengruppe in zwei relativ zueinander beabstandeten Lagen angeordnet.

Bei aus dem Stand der Technik bekannten Batteriemodulen kann Aufgrund der Nähe der einzelnen Batteriezellen zueinander die Gefahr besteht, dass bei einer thermischen Überlastung einer einzelnen Zelle benachbarte Zellen in Mitleidenschaft gezogen werden und ebenfalls thermisch Überlastet werden. Im Extremfall kann dabei ein Durchgehen einer Zelle das Durchgehen weiterer Zellen in einer Kettenreaktion hervorrufen. Auf der anderen Seite ist eine möglichst hohe Energiedicht der Batteriemodule gewünscht, wozu möglichst viele Batteriezellen eng zueinander beabstandet werden müssen.

Die EP 0 964 470 A1 offenbart ein Batteriemodul, aufweisend eine Mehrzahl von zueinander benachbart angeordneter und elektrisch miteinander verbundener Batteriezellen und eine Einrichtung zur Überwachung wenigstens eines Betriebsparameters der Batteriezellen und/oder des Batteriemoduls, wobei das Batteriemodul eine Einrichtung zur Vergrößerung des thermischen Widerstandes zwischen benachbarten Batteriezellen aufweist, wobei die Einrichtung mit der Einrichtung zur Überwachung wenigstens eines Betriebsparameters der Batteriezellen und/oder des Batteriemoduls dergestalt verbunden ist, dass bei einer Überschreitung eines Schwellenwertes des überwachten Betriebsparameters die Einrichtung zur Vergrößerung des thermischen Widerstandes ausgelöst wird.

Die EP 2 216 843 A1 offenbart beispielsweise eine Sicherheitsvorrichtung für ein Kraftfahrzeug. Dabei wird das Kraftfahrzeug mittels einer Batterievorrichtung betrieben, wobei die Batterievorrichtung ein Gehäuse aufweist, wobei das Gehäuse dergestalt eingerichtet ist, dass der Abstand und/oder die elektrische Verbindung zwischen einzelnen Batterieeinheiten der Batterievorrichtung vergrößert bzw. getrennt werden kann.

### Offenbarung der Erfindung

Es ist daher die Aufgabe der vorliegenden Erfindung ein Batteriemodul sowie ein Verfahren anzugeben, in und mit welchem einithermisches Durchgehen von benachbarten Batteriezellen vermieden wird.

Gelöst wird diese Aufgabe durch ein Batteriemodul gemäß Anspruch 1 sowie ein Verfahren gemäß Anspruch 8. Weitere Ausgestaltungen und bevorzugte Ausführungsformen finden sich in den abhängigen Ansprüchen und der nachfolgenden Beschreibung sowie den Zeichnungen.

Es wird somit ein Batteriemodul, aufweisend eine Mehrzahl von zueinander benachbart angeordneten und elektrisch miteinander verbundenen Batteriezellen und eine Einrichtung zur Überwachung wenigstens eines Betriebsparameters der Batteriezellen und/oder des Batteriemoduls, angegeben, welches dadurch gekennzeichnet ist, dass das Batteriemodul eine Einrichtung zur Vergrößerung des thermischen Widerstandes zwischen benachbarten Batteriezellen aufweist, wobei die Einrichtung mit der Einrichtung zur Überwachung des wenigstens eines Betriebsparameters der Batteriezellen und/oder des Batteriemoduls in derart Verbunden ist, dass bei einer Überschreitung eines Schwellwertes des überwachten Betriebsparameters einzelner Zellen und/oder des Batteriemoduls die Einrichtung zur Vergrößerung des thermischen Widerstandes ausgelöst wird, wobei eine Einrichtung zur Trennung der elektrischen Verbindung zwischen den einzelnen Batteriezellen vorgesehen ist, welche mit der Einrichtung zur Überwachung des wenigstens einen Betriebsparameters in der Art verbunden ist, dass bei Überschreitung der Schwellwerttemperatur eine elektrische Trennung der Batteriezellen voneinander erfolgt, wobei zwischen den Batteriezellen Kühlrippen vorgesehen sind, welche Kühlkanäle bilden.

In einem normalen Betriebszustand kann ein erfindungsgemäßes Batteriemodul somit eine möglichst dichte Packung an elektrisch gekoppelten Batteriezellen aufweisen, wodurch eine möglichst hohe Energiedicht im Verhältnis zum Raumbedarf des Batteriemoduls erzielt werden kann. Darüber hinaus können die Batteriezellen im Batteriemodul so auch thermisch gekoppelt werden, was bei gleichartigen Batteriezellen in einem Batteriemodul zu einer möglichst homogenen Leistungsabgabe der Batteriezellen führt.

Für den Fall einer Fehlfunktion oder einer Überlastung einer Batteriezelle, die zu einem Durchgehen der Batteriezelle führen können, ist es erfindungsgemäß vorgesehen, den thermischen Widerstand zwischen benachbarten Batteriezellen zu erhöhen. Hierdurch kann die Wärmeübertragung von einer Batteriezelle mit Fehlfunktion oder Überlast auf benachbarte Batteriezellen vermieden werden und insbesondere eine Beschädigung benachbarter Batteriezellen verhindert werden. Insbesondere kann ein Durchbrennen eines ganzen Batteriemoduls durch eine thermische Kettenreaktion von zueinander benachbarten Zellen verhindert werden.

Betriebsparameter können erfindungsgemäß die Spannung, die Stromstärke, der Ladestrom, die Temperatur oder ein anderer Parameter sein, der einen Rückschluss auf die Funktion und/oder den Betriebszustand einer Batteriezelle oder des Batteriemoduls zulassen. Bevorzugt wird zumindest die Temperatur der einzelnen Batteriezellen, einer Gruppe von Batteriezellen und/oder des gesamten Batteriemoduls überwacht. In einer weiter bevorzugten Ausgestaltung der Erfindung werden wenigstens zweig Betriebsparameter der einzelnen Batteriezellen, einer Gruppe von Batteriezellen und/oder des gesamten Batteriemoduls überwacht und als Schwellwert zur Auslösung der Vergrößerung des thermischen Widerstandes zwischen den benachbarten Batteriezellen in Betracht gezogen.

In einer bevorzugten Ausgestaltung der Erfindung weist diese eine Einrichtung zur Trennung der elektrischen Verbindung zwischen den einzelnen Batteriezellen auf, welche mit der Einrichtung zur Überwachung des wenigstens einen Betriebsparameters in der Art verbunden ist, dass bei Überschreitung des Schweilwertes des überwachten Betriebsparameters eine elektrische Trennung der Batteriezellen voneinander erfolgt.

Eine solche Einrichtung zur elektrischen Trennung kann beispielsweise durch Trennrelais, Dioden oder dergleichen gebildet sein. In einer Ausgestaltung der Erfindung kann eine elektrische Trennung der Batteriezellen auch durch Sollbruchstellen in den elektrischen Verbindungen erfolgen, welche in Folge der Vergrößerung des Abstandes zwischen den Batteriezellen getrennt werden und so zu einer elektrischen Trennung führen. Solche Sollbruchstellen können beispielsweise in Form von Steckverbindungen ausgeführt sein. Hierdurch können elektrische Kurzschlüsse in dem Batteriemodul bei überschreiten einen kritischen Betriebszustandes vermieden werden.

In einer bevorzugten Ausführungsform der Erfindung erfolgt die Erhöhung des thermischen Widerstandes zwischen benachbarten Batteriezellen durch eine Vergrößerung des Abstandes der benachbarten Zellen zueinander, sobald ein Schwellwert des überwachten Betriebsparameters durch eine einzelne Zelle und/oder das gesamte Batteriemodul überschritten wird.

In einer bevorzugten Ausgestaltung der Erfindung ist die Einrichtung zur Vergrößerung des thermischen Widerstandes zwischen den benachbarten Bätteriezellen eine Einrichtung zur mechanischen Vergrößerung des Abstandes zwischen den einzelnen Zellen, wie z.B. ein Federelemente welches in einem normalen Betriebszustand des Batteriemoduls gespannt ist und bei Überschreitung der Schwellwerttemperatur entspannt wird, wobei das Federelement derart in dem Batteriemodul angeordnet ist, dass eine Entspannung des Federelements zu einer Vergrößerung des Abstandes zwischen wenigstens zwei benachbarten Batteriezellen führt. Dabei kann die Abstandsvergrößerung sowohl in horizontaler als auch in vertikaler Richtung erfolgen. Es kann somit vorgesehen sein, dass das Federelement die benachbart zueinander angeordneten Batteriezellen auseinanderdrückt, um so den Abstand zwischen den Batteriezellen zu vergrößern, wodurch sich der thermische Widerstand zwischen den Zellen vergrößert. Ebenso kann es erfindungsgemäß vorgesehen sein, dass ein Federelement eine Batteriezelle bei Überschreitung einer Schwellwerttemperatur orthogonal zur Anordnungsrichtung der Batteriezellen ausrückt, wodurch ebenfalls der Abstand zwischen den benachbarten Batteriezellen vergrößert wird.

In einer weiteren Ausgestaltung der Erfindung ist die Einrichtung zur Vergrößerung des thermischen Widerstandes zwischen den Batteriezellen eine pyrotechnische Einrichtung ist, welche von der Einrichtung zur Überwachung des wenigtens einen Betriebsparameters bei Überschreitung des Schwellwertes des überwachten Betriebsparameters ausgelöst wird und wobei die pyrotechnische Reaktion zu einer mechanischen Vergrößerung des Abstandes zwischen wenigstens zwei benachbarten Batteriezellen führt. Eine solche pyrotechnische Einrichtung kann beispielsweise in der Art eines Airbags ausgeführt sein, bei welchem die durch eine pyrotechnische Reaktion freigesetzten Gase in einen zusammengefalteten Luftsack strömen und diesen so zur Expansion bringen. Der expandierende Luftsack kann dann die gewünschte Vergrößerung des thermischen Widerstandes in der Art des zuvor beschriebenen Federelementes bewirken.

In einer weiteren Ausgestaltung der Erfindung ist die Einrichtung zur Vergrößerung des thermischen Widerstandes zwischen benachbarten Batteriezellen durch eine Vorrichtung gebildet ist, welche ausgelöst durch die Einrichtung zur Überwachung des wenigstens einen Betriebsparameters bei Überschreiten des Schwellwertes des überwachten Betriebsparameters einen Isolierschaum in einen Zwischenraum zwischen zwei benachbarten Batteriezellen einbringt.

Als geeigneter Isolierschaum kann dabei beispielsweise ein Schaum auf Basis eines Polyurethans, vorzugsweise eines nicht brennbaren Polyurethans eingesetzt werden. Besonders geeignet sind solche Schäume, wie sie beispielsweise als Brandschutzschaum in Kabeldurchführungen eingesetzt werden. Der eingebrachte Isolierschaum kann dabei die Funktion eines Brandschotts zwischen zwei benachbarten Batteriezellen erfüllen.

Die Vorrichtung zur Einbringung des Isolierschaums zwischen benachbarte Batteriezellen kann beispielsweise eine Vorratskartusche umfassen, welche die beiden Reaktivkomponenten eines 2-Komponentenschaums enthält, sowie entsprechende Vorrichtungen wie Ventile und Leitungen, mittels welcher die Reaktivkomponenten gemischt und als Reaktivmischung in den Zwischenraum zwischen zwei benachbarten Batteriezellen eingebracht wird. Vorzugsweise erfolgt eine Mischung der beiden Reaktivkomponenten sowohl räumlich, als auch zeitlich erst kurz vor dem Einbringen in den Zwischenraum zwischen zwei Batteriezellen.

Das Gehäuse, welches die zur Bildung eines Batteriemoduls notwendigen Batteriezellen aufnimmt ist erfindungsgemäß vorzugsweise so ausgebildete, dass es für den Fall der Schwellwertüberschreitung des wenigstens einen überwachten Betriebsparameters einen hinreichenden Raum zur Vergrößerung des Abstandes zwischen zwei benachbarten Batteriezellen ausweist. Dies kann dadurch erfolgen, dass das Gehäuse einen Leerraum aufweist, welcher zur Vergrößerung des Abstandes zweier benachbarter Batteriezellen genutzt werden kann. Ebenso kann es vorgesehen sein, dass das Gehäuse Sollbruchstellen aufweist, welche im Fall der notwendigen Vergrößerung des thermischen Widerstandes aufreißen und so eine Vergrößerung des Abstandes zwischen zwei benachbarten Batteriezellen möglich machen. Auch kann es erfindungsgemäß vorgesehen sein, dass das Gehäuse in der Art einer Ziehharmonika aufgebaut ist, so dass ein Auseinanderziehen oder Auseinanderdrücken des Gehäuses, beispielsweise Durch ein wie zuvor beschriebenes Federelement oder eine pyrotechnische Einrichtung möglich ist.

Mit der Erfindung wird darüber hinaus ein Verfahren zur thermischen Entkoppelung von in einem Batteriemodul benachbart zueinander angeordneten Batteriezellen angegeben, wobei wenigstens ein Betriebsparameter der einzelnen Batteriezellen und/oder des Batteriemoduls überwacht wird und bei Überschreitung eines Schwellwertes des überwachten Betriebsparameters einer Batteriezelle und/oder des Batteriemoduls der thermische Widerstand zwischen zwei benachbart zueinander angeordneten Zellen erhöht wird.

In einer bevorzugten Ausführungsform des erfindungsgemäßen Verfahrens wird der thermische Widerstand zwischen zwei benachbarten Batteriezellen durch Vergrößerung des Abstandes zwischen den zwei benachbarten Batteriezellen erhöht. Dies kann beispielsweise mittels der zuvor beschrieben Einrichtungen unter Verwendung eines Federelementes und/oder einer pyrotechnischen Einrichtung erfolgen.

In einer bevorzugten Ausgestaltung des erfindungsgemäßen Verfahrens erfolgt vor einer Vergrößerung des Abstandes zwischen zwei benachbarten Batteriezellen eine elektrische Trennung der einzelnen Batteriezellen, beispielsweise mittels eines Trennrelais. Hierdurch können elektrische Kurzschlüsse oder Lichtbögen bei der Vergrößerung des Abstandes zwischen den Batteriezellen vermieden werden.

In einer weiteren Ausgestaltung des erfindungsgemäßen Verfahrens wird zur Vergrößerung des thermischen Widerstandes ein Isolierschaum in einen Zwischenraum zwischen zwei benachbarten Batteriezellen eingebracht.

Vorzugsweise wird hierbei ein nicht brennbarer Reaktivschaum aus wenigstens zwei Reaktivkomponenten aus einer Vorratskartusche mittels geeigneter Einrichtungen in den Zwischenraum zwischen zwei benachbarten Batteriezelien eingebracht.

Weitere Ausführungsformen der Erfindung finden sich in den in den anhängigen Ansprüchen, den nachfolgenden Beispielen, Figuren und Figurenbeschreibungen. Hierbei zeigt
- Fig. 1: zeigt schematisch die Funktionsweise eines erfindungsgemäßen Batteriemoduls;
- Fig. 2: zeigt schematisch die Funktionsweise eines erfindungsgemäßen Batteriemoduls unter Verwendung eines Isolierschaums.

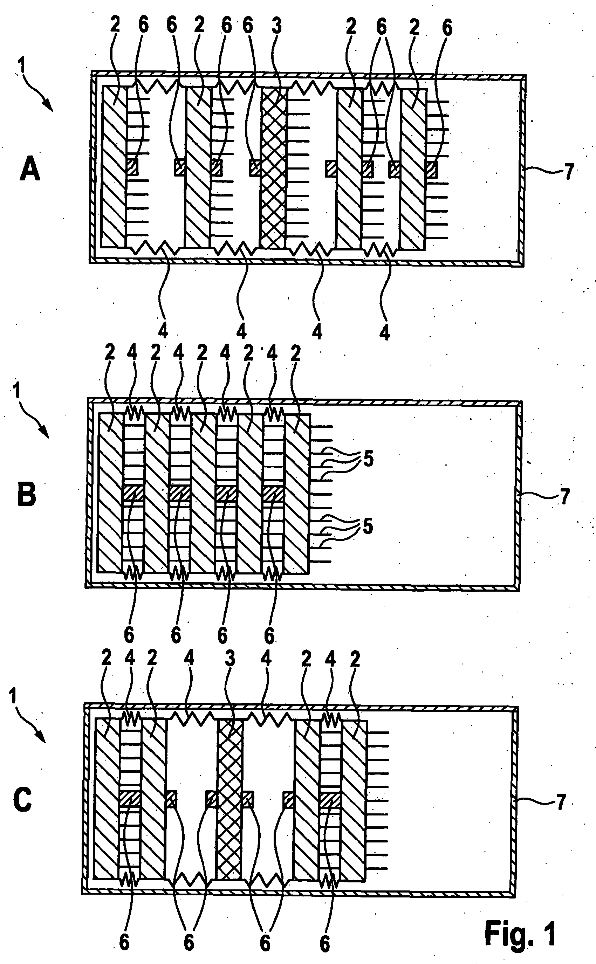

Fig. 1 zeigt schematisch die Funktionsweise eines erfindungsgemäßen Batteriemoduls 1. Darstellung B zeigt den normalen Betriebszustand des Batteriemoduls 1, bei welchem die in einem Batteriegehäuse 7 angeordneten Batteriezellen 2, 3 in engem Abstand zueinander angeordnet sind. Zwischen den Batteriezellen 2, 3 sind Federelemente 4 angeordnet, welche sich im normalen Betriebszustand des Batteriemoduls in gespannten Zustand befinden. Die Batteriemodule 2, 3 werden entgegen der durch die Federelemente wirkenden Kraft von geschlossenen Halteklammern 6 zusammengehalten. Die geschlossenen Halteklammern 6 sind mit einem Thermoelement ausgerüstet, welches sie bei Überschreitung einer Schwellwerttemperatur öffnet. Die mit dem Bezugszeichen 5 gekennzeichneten Stege dienen als Kühlripper der Batteriezellen 2, 3 und bilden im gezeigten normalen Betriebszustand des Batteriemoduls 1 Kühlkanäle, durch welche Kühlluft strömen kann. Darstellung A zeigt ein erfindungsgemäßes Batteriemodul 1, bei welchem nach Überschreitung einer Schwellwerttemperatur durch überhitzen der Batteriezelle 3 alle Halteklammern ausgelöst haben und die im Batteriegehäuse 7 angeordneten Batteriezellen 2, 3 zur Vergrößerung des thermischen Widerstandes zwischen den Batteriezellen 2, 3 durch die Federkraft der Federelemente 4 auseinandergedrückt wurden. In Darstellung C erfolgte durch die Überhitzung der Batteriezelle 3 lediglich ein Auslösen der an die Batteriezelle 3 angreifenden Halteklammern, wodurch die überhitzte Batteriezelle 3 von den noch jeweils paarweise angeordneten Batteriezellen 2 räumlich separiert wurde.

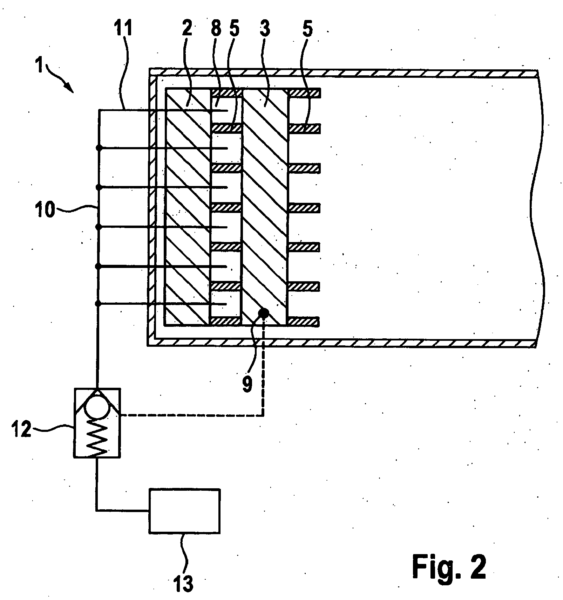

Fig. 2 zeigt eine Ausgestaltung eines erfindungsgemäßen Batteriemoduls 1, bei welchem die Vergrößerung des thermischen Widerstandes zwischen zwei zueinander benachbart angeordneten Batteriezellen 2, 3 im Störfall durch einen Isolierschaum hervorgerufen wird. Über einen Thermosensor 9 wird bei Überschreitung einer Schwellwerttemperatur ein Ventil 12 geöffnet, durch welches aus einer Vorratskartusche 13 ein nicht brennbarer 2-Komponenten Polyurethanschaum über eine Sammelleitung 10 und Verteilerleitungen 11 in die durch die Kühlrippen 5 gebildeten Kühlkanäle 8 strömt und dort spontan unter Bildung einer thermischen Isolierschicht aushärtet.

## Patentansprüche

1. Batteriemodul (1), aufweisend eine Mehrzahl von zueinander benachbart angeordneten und elektrisch miteinander verbundenen Batteriezellen (2, 3) und eine Einrichtung (6, 9) zur Überwachung wenigstens eines Betriebsparameters der Batteriezellen (2, 3) und/oder des Batteriemoduls (1), wobei das Batteriemodul (1) eine Einrichtung (4, 8) zur Vergrößerung des thermischen Widerstandes zwischen benachbarten Batteriezellen (2, 3) aufweist, wobei die Einrichtung (4, 8) mit der Einrichtung (6, 9) zur Überwachung wenigstens eines Betriebsparameters der Batteriezellen (2, 3) und/oder des Batteriemoduls (1) in derart Verbunden ist, dass bei einer Überschreitung eines Schwellwertes des überwachten Betriebsparameters die Einrichtung (4, 8) zur Vergrößerung des thermischen Widerstandes ausgelöst wird, **dadurch gekennzeichnet, dass**
eine Einrichtung zur Trennung der elektrischen Verbindung zwischen den einzelnen Batteriezellen vorgesehen ist, welche mit der Einrichtung (6, 9) zur Überwachung des wenigstens einen Betriebsparameters in der Art verbunden ist, dass bei Überschreitung der Schwellwerttemperatur eine elektrische Trennung der Batteriezellen (2, 3) voneinander erfolgt, wobei zwischen den Batteriezellen Kühlrippen (5) vorgesehen sind, welche Kühlkanäle (8) bilden.

2. Batteriemodul (1) gemäß Anspruch 1, wobei die Einrichtung (4) zur Vergrößerung des thermischen Widerstandes zwischen den Batteriezellen (2, 3) eine Einrichtung zur mechanischen Vergrößerung des Abstandes zwischen den einzelnen Batteriezellen (2, 3) ist.

3. Batteriemodul (1) gemäß Anspruch 2, wobei die Einrichtung (4) zur Vergrößerung des thermischen Widerstandes zwischen den Batteriezellen durch wenigstens ein Federelement gebildet wird, welches in einem normalen Betriebszustand des Batteriemoduls (1 ) gespannt ist und bei Überschreitung des Schwellwertes des überwachten Betriebsparameters entspannt wird, wobei das Federelement derart in dem Batteriemodul (1) angeordnet ist, dass eine Entspannung des Federelements zu einer Vergrößerung des Abstandes zwischen wenigstens zwei benachbarten Batteriezellen (2, 3) führt.

4. Batteriemodul (1) gemäß Anspruch 2, wobei die Einrichtung (4) zur Vergrößerung des thermischen Widerstandes zwischen den Batteriezellen (2, 3) eine pyrotechnische Einrichtung ist, welche von der Einrichtung (6, 9) zur Überwachung des wenigstens einen Betriebsparameters bei Überschreitung eines Schwellwertes des überwachten Betriebsparameters ausgelöst wird und wobei die pyrotechnische Reaktion zu einer mechanischen Vergrößerung des Abstandes zwischen wenigstens zwei benachbarten Batteriezellen (2, 3) führt.

5. Batteriemodul (1) gemäß Anspruch 1, wobei die Einrichtung (8) zur Vergrößerung des thermischen Widerstandes zwischen benachbarten Batteriezellen (2, 3) durch eine Vorrichtung gebildet ist, welche ausgelöst durch die Einrichtung (9) zur Überwachung des wenigstens einen Betriebsparameters bei Überschreiten des Schwellwertes des überwachten Betriebsparameters einen Isolierschaum in einen Zwischenraum zwischen zwei benachbarten Batteriezellen (2, 3) einbringt.

6. Batteriemodul (1) gemäß Anspruch 5, wobei der Isolierschaum ein nicht brennbarer Isolierschaum auf Polyurethan-Basis ist.

7. Verfahren zur thermischen Entkoppelung von in einem Batteriemodul (1) benachbart zueinander angeordneten Batteriezellen (2, 3), wobei wenigstens ein Betriebsparameter der einzelnen Batteriezellen (2, 3) und/oder des Batteriemoduls (1) überwacht wird und bei Überschreitung eines Schwellwertes des überwachten Betriebsparameters einer Batteriezelle (2, 3) und/oder des Batteriemoduls (1) der thermische Widerstand zwischen zwei benachbart zueinander angeordneten Batteriezellen (2, 3) erhöht wird, **dadurch gekennzeichnet, dass** eine Einrichtung zur Trennung der elektrischen Verbindung zwischen den einzelnen Batteriezellen vorgesehen ist, welche mit der Einrichtung (6, 9) zur Überwachung des wenigstens einen Betriebsparameters in der Art verbunden ist, dass bei Überschreitung der Schwellwerttemperatur eine elektrische Trennung der Batteriezellen (2, 3) voneinander erfolgt, wobei zwischen den Batteriezellen Kühlrippen (5) vorgesehen sind, welche Kühlkanäle (8) bilden.

8. Verfahren gemäß Anspruch 7, wobei der thermische Widerstand durch Vergrößerung des Abstandes zwischen zwei benachbarten Batteriezellen (2, 3) erhöht wird.

9. Verfahren gemäß Anspruch 7 oder 8, wobei zur Vergrößerung des thermischen Widerstandes ein Isolierschaum in einen Zwischenraum zwischen zwei benachbarten Batteriezellen (2, 3) eingebracht wind.

## Claims

1. Battery module (1) having a plurality of battery cells (2, 3) which are arranged adjacent to one another and are electrically connected to one another, and having a device (6, 9) for monitoring at least one operating parameter of the battery cells (2, 3) and/or of the battery module (1), wherein the battery module (1) has a device (4, 8) for increasing the thermal resistance between adjacent battery cells (2, 3), wherein the device (4, 8) is connected to the device (6, 9) for monitoring at least one operating parameter of the battery cells (2, 3) and/or of the battery module (1) in such a way that, when a threshold value of the monitored operating parameter is exceeded, the device (4, 8) for increasing the thermal resistance is tripped, **characterized in that** a device for disconnecting the electrical connection between the individual battery cells is provided, the said device being connected to the device (6, 9) for monitoring the at least one operating parameter in such a way that, when the threshold value temperature is exceeded, the battery cells (2, 3) are electrically isolated from one another, wherein cooling ribs (5) which form cooling ducts (8) are provided between the battery cells.

2. Battery module (1) according to Claim 1, wherein the device (4) for increasing the thermal resistance between the battery cells (2, 3) is a device for mechanically increasing the distance between the individual battery cells (2, 3).

3. Battery module (1) according to Claim 2, wherein the device (4) for increasing the thermal resistance between the battery cells is formed by at least one spring element which is stressed in a normal operating state of the battery module (1) and is relieved of stress when the threshold value of the monitored operating parameter is exceeded, wherein the spring element is arranged in the battery module (1) in such a way that relieving the spring element of stress leads to an increase in the distance between at least two adjacent battery cells (2, 3).

4. Battery module (1) according to Claim 2, wherein the device (4) for increasing the thermal resistance between the battery cells (2, 3) is a pyrotechnic device which is tripped by the device (6, 9) for monitoring the at least one operating parameter when a threshold value of the monitored operating parameter is exceeded, and wherein the pyrotechnic reaction leads to a mechanical increase in the distance between at least two adjacent battery cells (2, 3).

5. Battery module (1) according to Claim 1, wherein the device (8) for increasing the thermal resistance between adjacent battery cells (2, 3) is formed by an apparatus which, tripped by the device (9) for monitoring the at least one operating parameter when the threshold value of the monitored operating parameter is exceeded, introduces an insulating foam into an intermediate space between two adjacent battery cells (2, 3).

6. Battery module (1) according to Claim 5, wherein the insulating foam is a non-combustible insulating foam based on polyurethane.

7. Method for thermally decoupling battery cells (2, 3) which are arranged adjacent to one another in a battery module (1), wherein at least one operating parameter of the individual battery cells (2, 3) and/or of the battery module (1) is monitored, and, when a threshold value of the monitored operating parameter of a battery cell (2, 3) and/or of the battery module (1) is exceeded, the thermal resistance between two battery cells (2, 3) which are arranged adjacent to one another is increased, **characterized in that** a device for disconnecting the electrical connection between the individual battery cells is provided, the said device being connected to the device (6, 9) for monitoring the at least one operating parameter in such a way that, when the threshold value temperature is exceeded, the battery cells (2, 3) are electrically isolated from one another, wherein cooling ribs (5) which form cooling ducts (8) are provided between the battery cells.

8. Method according to Claim 7, wherein the thermal resistance is increased by increasing the distance between two adjacent battery cells (2, 3).

9. Method according to Claim 7 or 8, wherein an insulating foam is introduced into an intermediate space between two adjacent battery cells (2, 3) in order to increase the thermal resistance.

## Revendications

1. Module de batterie (1) présentant plusieurs cellules (2, 3) de batterie disposées les unes à côté des autres et raccordées électriquement les unes aux autres et un dispositif (6, 9) de surveillance d'au moins un paramètre de fonctionnement des cellules (2, 3) de batterie et/ou du module de batterie (1),
le module de batterie (1) présentant un dispositif (4, 8) d'augmentation de la résistance thermique entre des cellules (2, 3) de batterie voisines,
le dispositif (4, 8) étant relié au dispositif (6, 9) de surveillance d'au moins un paramètre de fonctionnement des cellules (2, 3) de batterie et/ou du module de batterie (1) de telle sorte que le dispositif (4, 8) d'augmentation de la résistance thermique soit activé en cas de dépassement d'une valeur de seuil du paramètre de fonctionnement surveillé,
**caractérisé en ce que**
un dispositif de coupure de la liaison électrique entre les différentes cellules de batterie, relié au dispositif (6, 9) de surveillance d'au moins un paramètre de fonctionnement de telle sorte que les cellules (2, 3) de batterie soient séparées électriquement en cas de dépassement de la valeur de température de seuil, est prévu et
**en ce que** des ailettes de refroidissement (5) qui forment des canaux de refroidissement (8) sont prévues entre les cellules de batterie.

2. Module de batterie (1) selon la revendication 1, dans lequel le dispositif (4) d'augmentation de la résistance thermique entre des cellules (2, 3) de batterie voisines est un dispositif augmentant mécaniquement la distance entre les différentes cellules (2, 3) de batterie.

3. Module de batterie (1) selon la revendication 2, dans lequel le dispositif (4) d'augmentation de la résistance thermique entre des cellules de batterie est formé d'au moins un élément élastique qui est serré dans un état de fonctionnement normal du module de batterie (1) et qui est desserré lorsque la valeur de seuil du paramètre de fonctionnement surveillé est dépassée, l'élément élastique étant disposé dans le module de batterie (1) de telle sorte qu'une détente de l'élément élastique entraîne une augmentation de la distance entre au moins deux cellules (2, 3) de batterie voisines.

4. Module de batterie (1) selon la revendication 2, dans lequel le dispositif (4) d'augmentation de la résistance thermique entre des cellules (2, 3) de batterie est un dispositif pyrotechnique qui est déclenché par le dispositif (6, 9) de surveillance d'au moins un paramètre de fonctionnement en cas de dépassement d'une valeur de seuil du paramètre surveillé, la réaction pyrotechnique entraînant une augmentation de la distance entre au moins deux cellules (2, 3) de batterie voisines.

5. Module de batterie (1) selon la revendication 2, dans lequel le dispositif (8) d'augmentation de la résistance thermique entre des cellules (2, 3) de batterie est formé d'un ensemble qui, déclenché par le dispositif (9) de surveillance d'au moins un paramètre de fonctionnement en cas de dépassement d'une valeur de seuil du paramètre surveillé, amène une mousse isolante dans un espace intermédiaire entre deux cellules (2, 3) de batterie voisines.

6. Module de batterie (1) selon la revendication 5, dans lequel la mousse isolante est une mousse isolante non combustible à base de polyuréthane.

7. Procédé de découplage thermique de cellules (2, 3) de batterie disposées les unes à côté des autres dans un module de batterie (1), dans lequel au moins un paramètre de fonctionnement des différentes cellules (2, 3) de batterie et/ou du module de batterie (1) est surveillé et en cas de dépassement d'une valeur de seuil du paramètre de fonctionnement d'une cellule (2, 3) de batterie et/ou du module de batterie (1), la résistance thermique entre des cellules (2, 3) de batterie voisines est augmentée,
**caractérisé en ce que**
un dispositif de coupure de la liaison électrique entre les différentes cellules de batterie, relié au dispositif (6, 9) de surveillance d'au moins un paramètre de fonctionnement de telle sorte que les cellules (2, 3) de batterie soient séparées électriquement en cas de dépassement de la valeur de température de seuil, est prévu et
**en ce que** des ailettes de refroidissement (5) qui forment des canaux de refroidissement (8) sont prévues entre les cellules de batterie.

8. Procédé selon la revendication 7, dans lequel la résistance thermique entre des cellules (2, 3) de batterie voisines est augmentée par augmentation de la distance entre deux cellules (2, 3) de batterie voisines.

9. Procédé selon les revendications 7 ou 8, dans lequel une mousse isolante est apportée dans un espace intermédiaire entre deux cellules (2, 3) de batterie voisines.
